# EUROPEAN PATENT APPLICATION

(11) **EP 2 624 580 A1**
(43) Date of publication of application: **07.08.2013**
(21) Application number: 12153982.9
(22) Date of filing: 06.02.2012
(51) Int. Cl.: H04N 21/418, H04N 21/236, H04N 21/434, H04N 21/4402, H04N 21/462

(54) **A system for receiving and prestenting media content**

(71) Applicant: SmarDTV S.A., 1033 Cheseaux-sur-Lausanne (CH)
(72) Inventor: Deprez, Olivier, 13600 La Ciotat (FR)
(74) Representative: Leman Consulting S.A.

(57) **Abstract**

The present invention concerns an audio/video broadcast reception system for receiving and presenting conditional access media content. The conditional access content is processed in a conditional access module and sent, for presentation, to a host device. The host device can receive the broadcast content and is further configured to receive a second content via a second receiver from a file server using streaming techniques. The second content is generally in encrypted format. The received file is inserted into a file track within a first transport stream and sent for decryption, via a transport stream interface, to the conditional access module. The conditional access module extracts and decrypts the file and sends the decrypted file back to the host device within a file track in a second transport stream where the file is played in a media player, thereby presenting the second content.

## Description

### TECHNICAL DOMAIN

The present invention pertains to the domain of digital media streaming, especially adaptive streaming and is of particular pertinence when applied to systems in which such content is protected according to digital rights management techniques (DRM).

### STATE OF THE ART

With so much digital television content becoming available over the Internet, digital television sets adapted to be able to pull such content from the Internet are now becoming available.

Providers of digital content who make such content available over the internet may do so using so called adaptive streaming techniques whereby a single piece of content may be encoded several times at different bit-rates and stored in multiple files in order for a client to be able to select from which file to receive the content, depending on the currently available bandwidth of the reception channel. Adaptive streaming techniques allow for the client to select a new bit-rate at predetermined positions within a transmission according to fluctuations in available bandwidth during delivery of a piece of content. In order to facilitate this it is usual for the files corresponding to the different bit-rates to be split into a number of chunks in such a way that chunk boundaries are aligned for all of the files.

In Indian Patent Application Number IN2011CH02145, Publication Number IN02145CH2011A, methods for achieving distribution of content via media-over-HTTP streaming technology are disclosed. In order to avoid discontinuities in the quality of video received during streaming due to variations in available bandwidth during the transmission, this document proposes the use of adaptive streaming techniques whereby chunks or segments of content are prepared at a number of different qualities and stored for delivery over HTTP. The amount of available bandwidth is monitored during the delivery and this awareness is used to control the selection of which particular quality of chunks or segments of media are delivered at a particular time.

This technique allows for better file-handling capabilities of the potentially very high number of files (chunks or segments) of various qualities by taking into account the inter-relationship between the files and caching them within a network of intermediate servers. However this document does not disclose any solution to particular problems related to the use of such adaptive streaming techniques within a TV broadcast context.

It is worth noting at this point that the term "file", as used in the present application, may refer equally to entire content files, one or more chunks from a content file or one or more segments from a content file.

Instead of preparing a number of files each representing the complete content but at various bit-rates, thereby corresponding to different qualities of the content, other techniques exist where a number of files are prepared according to techniques known in the domain of scalable content transmission. This technique is disclosed in European Patent Application Publication Number EP 2 360 923 A1, resulting in client devices receiving a base layer, providing the content at a basic quality, and further receiving at least one enhancement layer, which may be combined with the base layer to provide an improved quality of the content.

Neither of the two above documents however allow for particular considerations related to problems which arise in the context of conditional access to content to be realised.

United States Patent Application Publication Number US 2010/239090 A1 discusses the prevention of theft of protected IPTV content, i.e. content which is transmitted via the Internet but which should be protected. The subject is presented against a background of traditional content protection schemes whereby encrypted content is received from a transport stream and decrypted by a set-top box (STB) or other such dedicated device at a customer's premises. A problem is revealed whereby with the advent of IPTV, content may now be delivered to remote devices such as personal computers or mobile devices via the Internet, and therefore the protection provided by the STB connected to a television set is lost. The solution proposed in this document is to provide a conditional access device (CAD) in the form of a portable thumb drive or memory stick which is connectable to a PC via a standard USB interface. When connected to a personal computer, the CAD launches an application on the computer to perform the conditional access functions that would otherwise have been performed by the STB in the traditional STB-TV arrangement. The document mentions that an STB and TV may be included in the system, but this works in the traditional manner in that it is used to decode a transport stream: the PC-CAD combination is used to handle the protected IPTV content. Nothing is taught in the document concerning how to use the TV in combination with the STB to give access to the protected IPTV content whether in an adaptive streaming mode or otherwise.

### BRIEF SUMMARY OF THE INVENTION

The following description uses the terms transport streams and tracks, which are based on the generally accepted notions as used in the MPEG standard in the domain of broadcast systems. A transport stream is a standard format for transmission and storage of digital media such as audio, video, programme and system data and the like. A transport stream may carry a plurality of programmes described by a programme association table. A transport stream may comprise a plurality of elementary stream tracks such as a video track or an audio track. Other types of track exist such as a subtitle track or a file track. A programme may be coded across a plurality of tracks, for example a programme can be coded across a video track and an audio track in order to be able to present both audio and video of a broadcast programme content. A file track on the other hand could have both audio and video of a particular IP content coded within it. A subtitle track may have just text.

As is known in the domain of broadcast of audio/video content, and especially where such content is subject to conditional access protection, a provider broadcasts an encrypted version of the content to a plurality of consumers and further broadcasts information which will allow authorised consumers to be able to decrypt the content. It is usual for an authorised consumer of the content to avail himself of an apparatus comprising a broadcast receiver to receive the broadcast content. The apparatus is called a host device. In order to decrypt the content, the user has a conditional access module, usually comprising a security module for holding secret information such as decryption keys. The conditional access module is removably connectable to the host device via an interface which could be of any of the known standards, such as CI+, which includes a command interface and a transport stream interface. According to the present invention, a second receiver is present in the host device over and above the broadcast receiver, or first receiver. The second receiver is for receiving a second content from a second network other than the broadcast network. The second network could be a file server or the internet or generally any network storing files comprising the conditional access content. The second receiver could therefore be an internet protocol receiver to retrieve content from an internet protocol network. By retrieve it is meant that a targeted piece of content is received, usually by issuing a reference to that content, such as by an address or a URL.

In the context of IP content, generally made available via live streaming or adaptive streaming techniques, the notion of chunks of content is used. A transport stream is stored as a file on a network and chunks of the file are retrieved as required. In adaptive streaming, several different files are stored on the network, each file representing the same content at different qualities or bit-rates. Chunks may be taken from different files representing the same content at different rates. This is facilitated by the fact that the various chunk files are prepared such that chunk boundaries are aligned for all files.

Content which is available via HTTP adaptive streaming is increasingly provided in a file format based on the ISO Base Media File Format, as specified in ISO/IEC 14496-14, otherwise known as ISOMBFF. Other formats such as ISO/IEC 14496-14 exist, otherwise known as MP4FF. According to another aspect of the present invention, a method and a device are provided for passing an ISOBMFF file over the Transport Stream Interface of a Common Interface Plus (Cl+) interface between a television receiver host device and a Common Interface Conditional Access Module where the ISOBMFF file can be decrypted. Other embodiments of the present invention allow for the same goals to be achieved in a system where the interface between the host and the Conditional Access Module is configured to operate according to a standard other then the Cl+ Standard, such as for example a DTCP-IP standard within a Home Network. Similarly, embodiments of the invention may be deployed in a system where the format or container used for the adaptive streaming is a different format from ISOBMFF. It is to be noted that there is no defined way to pass an ISOBMFF file over the Common Interface Transport Stream connection between a host device and a CICAM.

Content files may be encrypted according to known digital management rights techniques (DRM). A standard TV broadcast reception device may not, and indeed generally does not, comprise the necessary DRM technology to allow the decryption of the content, even if the device were configured to allow reception of the content files under discussion herein. This means that a user of such equipment would not be able to enjoy unhindered viewing of such protected content. It is an aim of the present invention to provide a solution whereby a CICAM (a conditional access module operating according to a Common Interface Standard, known in the broadcast industry) is used to host the appropriate digital rights management technology useful to decrypt such content.

Among others, it is a goal of the present invention to provide a method and a system for receiving HTTP IPTV content in a host device and passing the received content to a Common Interface Conditional Access Module. According to particular embodiments of the invention, the content is received using adaptive streaming techniques. The content is generally received in encrypted format, according to digital management rights techniques (DRM), and decrypted in the Conditional Access Module before being passed back to the host device for display. During this last passage, the content is usually secured via a link protection scheme. Link protection schemes are known in systems operating in Home Networks according to the DTCP-IP Standard for example.

According to a first aspect of the present invention, a method and a device are provided to allow for a reception device such as a TV receiver to receive encrypted content via the Internet, the reception being controlled by an HTTP adaptive streaming client, and inserting the received encrypted file into a track within a transport stream, known from the domain of media broadcast. The transport stream, with the encrypted content, is passed to a conditional access module where the encrypted file is extracted. The file is decrypted in the conditional access module and the decrypted file is inserted into another transport stream to be sent back to the host for display. According to aspects of the invention, before sending the transport stream back to the host device, this transport stream is secured using a link protection, which can be removed by the host device thus giving access to unencrypted content. According to other aspects of the invention, any digital rights management information, useful for the decryption of the content, is sent, under the control of a file exchange resource via the command interface, from the host to the conditional access module, along with the encrypted content in the transport stream to allow the conditional access module to decrypt the file.

The invention provides a system for receiving and presenting media content, the system comprising a host device and a conditional access module configured to be connected to the host device, the connection comprising a transport stream interface and a command interface;
the host device being configured to send a first transport stream comprising at least one first transport stream track via the transport stream interface and to receive, via the transport stream interface, a second transport stream comprising at least one second transport stream track;
the host device comprising:
a broadcast receiver to receive a broadcast signal from a broadcast network and to decode the broadcast signal to give the first transport stream track; and
a media player to present the media content;
   the system **characterised in that**:
   the host device further comprises:
   a streaming client to retrieve at least one chunk of an unprocessed version of the media content via a second receiver from at least a first file comprising a plurality of chunks of the unprocessed version of the media content;
   means to insert the retrieved chunk into a file track in the first transport stream,
   thereby building a first transport stream file;
   means to provide information relative to the first transport stream file to the conditional access module via the command interface; and
   means to extract a second transport stream file representative of the content from a file track in the second transport stream, the extraction using information relative to the second transport stream file, the host device being configured to receive said information via the command interface;
      and the conditional access module comprises:
      means to extract the first transport stream file from the first transport stream,
      using information relative to the first transport stream file, the conditional access module being configured to receive said information via the command interface;
      at least one processing module to process at least the first transport stream file to give at least the second transport stream file representative of the media content;
      means to insert the second transport stream file into the file track in the second transport stream; and
      means to provide information relative to the second transport stream file to the
      host device via the command interface;
         the media player being configured to play the second transport stream file, thereby presenting the media content.

According to another aspect of the present invention, there is provided a host device for receiving and presenting media content, the host device being configured to build a first transport stream comprising at least one first transport stream track and to receive a second transport stream comprising at least one second transport stream track;
the host device comprising:
a transport stream interface;
a command interface;
a broadcast receiver to receive a broadcast signal from a broadcast network and to decode the broadcast signal to give the first transport stream track; and
a media player to present the media content;
   the host device **characterised in that** it further comprises:
a streaming client to retrieve at least one chunk of an unprocessed version of the media content via a second receiver from at least a first file comprising a plurality of chunks of the unprocessed version of the media content;
means to insert the retrieved chunk into a file track in the first transport stream, thereby building a first transport stream file;
means to send information relative to the first transport stream file via the command interface; and
means to extract a second transport stream file comprising the content from a file track in the second transport stream, the extraction using information relative to the second transport stream file, the host device being configured to receive said information via the command interface;
the media player being configured to play the second transport stream file, thereby presenting the media content.

According to yet another aspect of the present invention, there is provided a conditional access module to process at least part of a first transport stream, the conditional access module comprising:
a transport stream interface to receive the first transport stream;
a command interface;
means to extract a first transport stream file from the first transport stream, using information relative to the first transport stream file, the conditional access module being configured to receive said information via the command interface;
a processing module to process the first transport stream file to give a second transport stream file;
means to insert the second transport stream file into a file track in the second transport stream; and
means to send information relative to the second transport stream file via the command interface;

According to a further aspect of the present invention, there is provided a method for receiving and presenting media content using a system comprising a host device and a conditional access module configured to be connected to the host device, the connection comprising a transport stream interface and a command interface, the method comprising:
receiving in the host device, via file streaming means, at least one chunk of an unprocessed version of the media content;
preparing a first transport stream file comprising the chunk of the unprocessed version of the media content;
inserting the first transport stream into a file track of a first transport stream;
sending, via the transport stream interface, the first transport stream;
sending, via the command interface, information relative to the first transport stream file;
extracting, in the conditional access module, the first transport stream file from the first transport stream using the information relative to the first transport stream file;
processing the first transport stream file in the conditional access module to give a second transport stream file representative of the media content;
inserting the second transport stream file into a second transport stream;
sending, via the transport stream interface, the second transport stream;
sending, via the command interface information relative to the second transport stream file;
extracting, in the host device, the second transport stream file from the second transport stream using the information relative to the second transport stream file;
presenting, the second transport stream file using a media player.

### BRIEF DESCRIPTION OF THE DRAWINGS

The present invention will be better understood thanks to the detailed description which follows and the accompanying drawings, which are given as non-limiting examples of embodiments of the invention, namely:
Fig. 1, showing a schematic diagram of a system in which an embodiment of the present invention may be deployed;
Fig. 2, showing a schematic diagram showing more detail of a system in which an embodiment of the present invention may be deployed.

### DETAILED DESCRIPTION

Embodiments of the present invention are applicable in the domain of transmission of digital content subject to conditional access restrictions and may find use in a system comprising a host device, such as a digital television receiver/decoder/viewer, connected to a conditional access module (CAM), where the host transfers digital content, usually received via a broadcast reception channel, for processing, to the CAM over a transport stream (TS) interface operating according to the Common Interface protocol or CI+ protocol. Such CAMs are generally known as CICAMs. CICAMs are usually removably connectable to their host devices and may be of a physical format which is compatible with the PCMCIA specification. Embodiments of the present invention can be practiced when such apparatus is fitted with a further reception channel allowing for the reception of content in a file format from a separate network.

By digital content it is meant to include any of the known media content such as audio/video content, pictures, text, audio, games, applications etc. Such content is usually encrypted or otherwise protected and requires to be decrypted, usually for a fee. Upon payment of a fee, by a user, to a content provider, the user will be given access to decryption keys for decrypting the content. The decryption keys are usually stored on a security device which may be either permanently attached to the conditional access module or removably connectable to the conditional access module. The security module deals with security procedures such as authentication and supplying decryption keys.

As is known in the domain of downloading of content from the Internet, if a user connects to an Internet Service Provider (ISP) at a bit-rate of 3Mbps for example, this does not necessarily mean that the user will enjoy a communication bandwidth of 3 Mbps during the whole of the time over which the download progresses. The available bandwidth may, and indeed does, vary, such variation being based, among others, on the network conditions. As the network conditions fluctuate over the duration of the download, during a streaming session where the content is video content for example, which the user tries to view at the same time as the content is downloading, this variation causes the video quality to fluctuate. Adaptive streaming techniques are used to alleviate this problem. Adaptive streaming includes any of the techniques which allow for the adjustment of the quality of content received during a transmission, such as a video content for example, to be adjusted during the delivery. The adjustment is dictated at the receiving end, where the network and/or system conditions are progressively monitored, and is based on the current conditions. When the current conditions are favourable, higher quality content may be received, while during unfavourable conditions, it is only possible for a lower quality version of the content to be received. In adaptive streaming, the content therefore needs first to be prepared by encoding it a number of times to give a plurality of versions of the same content but at different qualities or bit-rates, the higher qualities requiring to be transmitted higher bandwidths than the lower qualities. Each version of the content is divided into a plurality of chunks or segments with each chunk comprising content information representing a specific time period. By monitoring the current conditions during the progress of the download, the receiver can select, for each time period, the appropriate version of the content to receive. The content can be readily reconstructed since, in preparing the various chunk files, care has been taken to make sure that the chunk boundaries are aligned for all of the files.

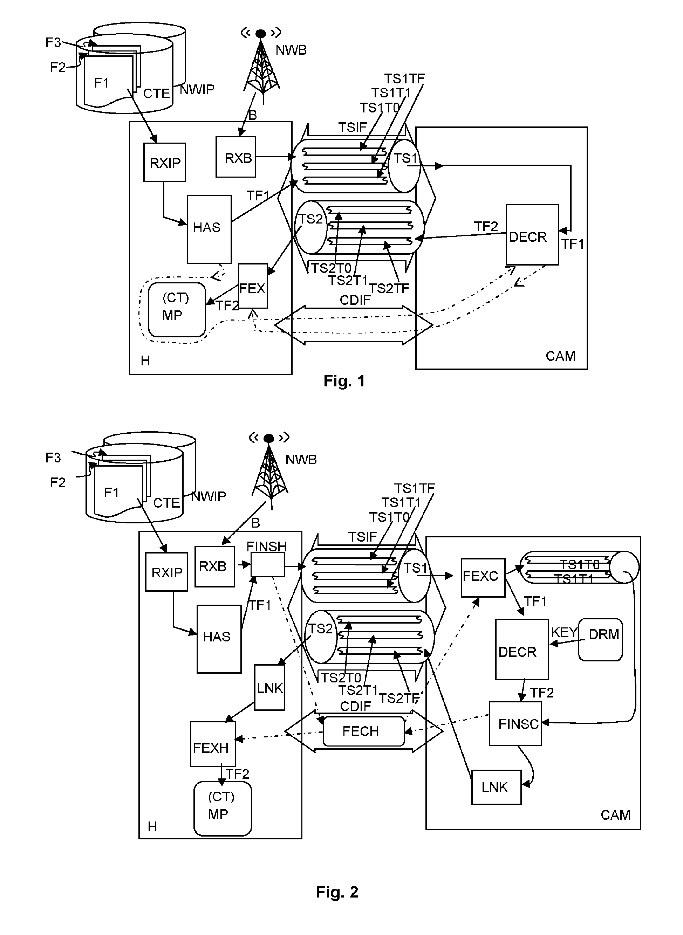

Fig. 1 shows a schematic diagram of a system in which an embodiment of the present invention may be deployed. The system comprises a host device (H), configured to receive a first digital content from a first network, such as a broadcasting network for example (NWB), via a first channel into a first receiver (RXB). Broadcasting networks may include any of the traditional broadcasting networks known in the field of broadcasting and can further include the known multicasting distribution networks where one provider provides content for simultaneous consumption to a plurality of users. This first digital content is referred to as broadcast content. It may be received from an antenna, from internet, from a cable, from a satellite etc.

The host device (H) may be CI+ compliant. CI+ is a common interface digital interconnect standard widely used in the domain of digital video broadcast. The standard allows for broadcasters to use modules containing solutions from different suppliers in the same broadcast system and includes specifications relative to connections between a host device such as a set-top box or digital television and a module such as a conditional access module commonly found in systems compatible with Pay-TV schemes. The standard describes, among others, a control interface for commands to pass between the host and the module and a transport stream interface for scrambled or encrypted content to pass from the host to the module and for descrambled or decrypted content to pass back from the module to the host. The received first digital content may require to be pre-processed, by filtering or otherwise decoding, in order to produce a convenient transport stream. Generally a transport stream comprises an audio track and a video track of a selected broadcast or VOD (Video on Demand) for example. The audio or the video tracks are just two examples of types of transport stream tracks which may exist. In Fig. 1 the receiver RXB represents all the functionality required to receive, demodulate and prepare the broadcast content to be inserted into one or more tracks of a transport stream to be sent to the module via the transport stream interface. As will be seen later, a transport stream may further comprise other types of track.

As shown in Fig. 1, the system further comprises a conditional access module (CAM) configured to communicate with the host device (H) via a transport stream interface (TSIF) and a command interface (CDIF). The transport stream interface (TSIF) may be regarded as two transport stream interfaces: one for content going from the host to the module and one for content returning from the module to the host; however in this description we refer to a single bidirectional transport interface (TSIF). We mean bidirectional in the sense that transport streams go in both directions, however each individual transport stream only goes one way: a first transport stream (TS1) going from the host to the module and a second transport stream (TS2) going from the module to the host. The conditional access module (CAM) may be a CICAM as described above. The conditional access module (CAM) comprises decryption means (DECR). It receives encrypted content in the first transport stream (TS1) via the transport stream interface (TSIF) and delivers decrypted content in a second transport stream (TS2) via the transport stream interface (TSIF). The host has a media player (MP) to play the content. The media player plays the content by selecting the appropriate track from the received second transport stream. In Fig. 1 a separate file extractor (FEXH) is shown in front of the media player (MP) to extract a selected file or track from the second transport stream (TS2). The skilled person will realise that such extraction functions may easily be included in the media player (MP).

According to the embodiment of the invention, the host (H) further comprises a second channel, or internet protocol channel, through which it may receive further digital content from a second network, an IP network for example. The reception of the files is done in a particular manner as will be described later. Indeed, according to embodiments of the present invention content is retrieved chunk by chunk from one file or from a plurality of files from the network in response to an adaptive streaming client operating within the host device. The received further digital content is inserted into a file track within the transport stream and sent to the conditional access module to be processed. Processing in this case generally includes decryption since the further content is usually received in the host device in encrypted format according to a digital rights management protocol. The conditional access module extracts the file from the file track within the transport stream thus received and decrypts the file using a content key (KEY) obtained from a digital rights management agent (DRM) located in the conditional access module. This is shown in Fig. 2, which illustrates the system in a little more detail. The host device (H) and the module (CAM) make use of a file exchange resource (FECH) in order to synchronise with each other: through this means the host is able to provide the CAM with details about the file which was sent in the file track of the first transport stream. The further digital content may be audio/video content for example.

As mentioned above, the host further comprises a second channel, for example an Ethernet connection or a WiFi connection, via which it can receive a second digital content from an IP network or WAN for example. According to a preferred embodiment, the second channel operates as a TCP/IP Stack, which can use protocols such as HTTP, FTP, POP3, SMTP or telnet for example. The host device (H) is therefore able to retrieve content from the IP network via this second channel. The reception of this further content is managed by the HTTP Adaptive Streaming Client in the host device. It operates according to any of the known adaptive streaming methods to receive content from an internet protocol network or any network on which content files may be stored. The content is preferably referenced and identified by a URL, from the Internet (or WAN) and loaded chunk by chunk via the second channel (RXIP). The host device is configured to insert the received chunks progressively, chunk by chunk, into a file track within the first transport stream, thereby constructing a first transport stream file (TF1 ) within the first transport stream. Fig. 2 shows more detail whereby the function of inserting the chunks into the file track of the first transport stream to make the transport stream file is undertaken by a file inserter module (FINSH). The skilled person will however realise that the adaptive streaming client (HAS) may also comprise this functionality.

The HTTP Adaptive Streaming Client may function according to any of the acceptable protocols known, such as a Standard which is becoming more and more widely used for transmitting MPEG data by Dynamic Adaptive Streaming Over HTTP otherwise known as DASH or MPEG DASH. As mentioned, the container of the content can have a format adhering to the ISO Base Media File Format, as specified in ISO/IEC 14496-14, otherwise known as ISOMBFF. Other formats such as ISO/IEC 14496-14 exist, otherwise known as MP4FF. Other acceptable protocols according to which the HTTP Adaptive Streaming Client may function include Adaptive HTTP Streaming (AHS), Dynamic HTTP Streaming, HTTP Live Streaming, and Smooth Streaming.

Fig. 1 shows how the adaptive streaming client, since it knows how the first transport stream file is assembled into the first transport stream file track, is able to pass such information to the conditional access module, via the command interface, thus allowing the conditional access module to properly extract the file. In Fig. 2 this mechanism is shown in more detail, where the host's file inserter module (FINSH) sends the information via the command interface (CDIF) to the conditional access module's file extractor module (FEXC) using the file exchange resource (FECH).

As mentioned, the host comprises an embedded HTTP Adaptive Streaming Client (HAS). It is this Adaptive Streaming Client (HAS) which requests a file from the host device and which particular file to request, using its URL. Such requests will depend on one hand on the current conditions, i.e. the network conditions and/or the system conditions. The Adaptive Streaming Client therefore monitors the system and the network conditions in order to be able to request which particular chunk from the set of files of various qualities at the requested URL should be pulled. The host further comprises a media player to present the content.

Fig. 2 shows how a file exchange resource may be used to allow information useful for file extraction between the conditional access module and the host. The host uses this means to provide the CICAM with details concerning the file track on which the content files have been inserted. Similarly, as will be seen later, the conditional access module uses this resource to provide the host with details concerning the file track in the second transport stream. The term "files", used here, refers equally to entire content files, one or more chunks from a content file or one or more segments from a content file.

The conditional access module (CAM) thus receives a first programme and a second programme from the host device (H) via the transport stream interface (TSIF). The first programme comprises at least one transport stream track in the transport stream received from the host device. In practice however, the first programme comprises an audio track and a video track from the received transport stream. The second programme is comprised in another track from the transport stream, known as a file track. The file track represents the content that the host pulled from the WAN. The conditional access module (CAM) further comprises a file extractor (FEXH) to extract the file track from the first transport stream.

Whereas Fig. 1 illustrates a generalised view of a system in which an embodiment of the present invention may be deployed, the skilled person will understand that the streaming client (HAS) of Fig. 1 may be adapted to perform the function of Fig. 2's file inserter (FINSH). Similarly, Fig.1's decryptor may be configured to perform the function of extracting the transport stream file for decryption as well as the function of inserting the decrypted file track into the second transport stream, these functions being represented by the file extractor (FEXC) and the file inserter (FINSC) of Fig. 2.

It is worth noting that the digital rights management techniques applied to the file may be totally independent from any decrypting techniques carried out on the content within the transport stream which may have been received in the "normal way" from the broadcast network. Indeed, the system of the invention allows for the treatment of both contents to be independent such that the broadcast content can be recorded while the IP content is being presented or vice versa. Similarly, the broadcast content present in the transport stream need not even be encrypted, in which case, after extraction of the file from the transport stream and decryption of the file, the decrypted file is inserted into a second transport stream along with the other tracks which were remaining in the first transport stream. This aspect, among others, is illustrated in Fig. 2.

It is worth mentioning some details concerning the internet protocol network (NWIP), which stores a plurality of encrypted pieces of content. Each piece of encrypted content (CTE, CTEx) is stored separately and is addressable using an identifier (URL, URLx). Each content is represented by a plurality of files (F1, F2, F3), each being encoded at different qualities (Q1, Q2, Q3). By different encoding qualities, this is meant to refer to the characterising feature that is used to allow for adaptive streaming techniques to be used to deliver the content. For example, if the adaptive streaming technique uses files of different bit-rates, then content encoded at a lower quality is taken to mean content of a lower bit-rate, while content encoded at a higher quality is content at a higher bit-rate. Content encoded at a higher quality will be perceived by the viewer as being of a higher quality than content encoded at a lower quality.. On the other hand, if the technique used for adaptive streaming is one where a base layer is first transmitted and then augmented by one or more enhancement layers to provide content of varying qualities, then the term encoding quality refers to the different layers of content. The better the quality of the content as perceived by the viewer, the more enhancement layers have been used or the better the quality of the enhancement layers.

The reader is reminded that in the prior art it is usual for encrypted content to be received in the host device and decrypted in the host device using decryption keys made available thanks to the conditional access module. In the present invention, content which is received in encrypted format via the first channel (i.e. in the "normal" way) may still be decrypted in the host device using the known techniques for obtaining the decryption keys using the conditional access module. On the other hand, when content is received from the second channel (the IP channel) this content will generally be protected by digital rights management techniques. According to an embodiment of the present invention the encrypted content is sent in a file track within the first transport stream to the conditional access module and the decryption of the file track is done in the conditional access module. After adding a link protection the decrypted file (thus protected by the link protection) is sent back to the host where the protection can be removed and sent to the media player for viewing. This is illustrated in Fig. 2.

Fig. 1 shows how the conditional access module, since it knows how the second transport stream file is assembled into the second transport stream file track, is able to pass such information to the host device, via the command interface, thus allowing the host device to properly extract the file (TF2). In Fig. 2 this mechanism is shown in more detail, where the conditional access module's file inserter module (FINSC) sends the information via the command interface (CDIF) to the host device's file extractor module (FEXH) using the file exchange resource (FECH).

It is worth noting that embodiments of the present invention allow for the content received on the second channel, the IP channel, to be sent to the conditional access module without affecting the "normal" transfer of content received from the first channel (the broadcast network). This is inherent in the fact that the invention allows for the insertion of a file track of IP content into the transport stream. The normal functions of the transport stream may remain unchanged, i.e. the transport stream may still be used to transfer broadcast content from the host to the conditional access module, the broadcast content and the IP content being transferred in parallel with each other. In this manner, if the viewer were to watch the IP content on the display, then the system would still allow for the processing of the broadcast content in one of the usual ways, thus allowing for example recording of the broadcast content while viewing the IP content. According to embodiments of the present invention facilitating this method of recording broadcast content while watching IP content or vice versa, the conditional access module comprises means for decrypting the broadcast content in the manner that this is generally carried out in the state of the art in addition to the decryption means for isolating and decrypting the IP content. The decrypted file track and the decrypted transport stream tracks (audio, video and subtitle, where applicable) are combined into the second transport stream. Upon reception of the second transport stream in the host, the file track is separated from the transport stream tracks and played or recorded accordingly.

On the broadcast content side, the usual security protection known in the broadcast domain is applied i.e. using EMMs and ECMs. Generally, according to such techniques, a content key is encrypted by a domain key and distributed to all security modules. Here, access criteria are included in the content. The IP content is protected by Digital Rights Management techniques. Using these techniques, the content key is encrypted using a device key and the encrypted content key forms part of the license transmitted to the device intended to receive the content. In this case, access criteria are embedded in the license, i.e. separate from the content.

According to another embodiment, it could be considered that the processing of content received from the broadcast channel be unrelated to the processing of content received on the IP channel to the extent that the transport stream sent to the conditional access module from the host could include the IP content without any broadcast content at all. Indeed, the broadcast receiver could even be switched off or temporarily disabled, allowing the system to be used solely for presenting the IP content at least for a part of the time that the system is in use.

According to preferred embodiments of the present invention, the content retrieved from the WAN may be encrypted or otherwise protected using any of the digital rights management techniques known in the industry. In this case, the conditional access module has the necessary digital rights management agent embedded within it from which it will be able to obtain the necessary decryption keys.

As shown in Fig. 2, to close the loop, the file inserter (FINSC) in the conditional access module (CAM) assembles the extracted and decrypted chunks (in the case that decryption is a desired step in the process) into a file track representing the second programme. This file track is then inserted into a second transport stream to be sent to the host device via the transport stream interface. In preferred embodiments of the present invention it is desirable to maintain high security and to maintain some form of encryption upon the content, especially at boundaries where content is being transferred from one module to another. For example, once the content is decrypted in the conditional access module and then transferred back to the host device in the second transport stream, it could be picked up at that point by an unscrupulous eavesdropper. To prevent this, the conditional access module adds a link protection (LNK), which is basically an encryption, on top of this transport stream. Once in the host device it is a simple task for the host to remove the link protection (LNK). This is illustrated in Fig. 2. Link protections such as this are known in the state of the art and may include techniques such as pairing for example.

The present invention, being aimed for use in a digital rights management environment (DRM) can be deployed within a system comprising a receiver such as a digital television set for example, coupled with a conditional access module. The conditional access module can be of a CICAM form and therefore detachable from the receiver. The coupling between the two may be made according to a standard communication protocol such as CI+. Alternatively, the conditional access module may be a device connected somewhere on a Home Network comprising one or more receivers on which content can be received and preferably presented for viewing, the requested files being transferred between the conditional access module and the receiver by HTTP for example. The common features of these settings are that content received at the receiver may be encrypted by a content key. Each device intended to be used to decrypt the content has a device key. The content to be protected is encrypted by a particular device key, the encrypted content key being part of the license transmitted to the device. In this manner, each device has a unique license and only an authorised device will be able to find the encryption key. Access criteria also form part of the license and are not transmitted along with the content. When the decrypted content is transferred to the host device from the conditional access module it is protected by link protection. The link protection is part of the CI+ protocol in the case of a CICAM for example or may be DTCP-IP for example in the case of a Home Network. Indeed, according to embodiments of the present invention, it is not necessary that the host and the conditional access module be connected by a CI+ interface, since other connectivity scenarios such as Home Network DTCP-IP are possible.

According to another embodiment of the present invention, it is possible for the conditional access module to process a plurality of different contents concurrently. In order to do this, according to one variant of this embodiment, the processing module (DECR) in conditional access module (CAM) is configured to process each of the different contents to give corresponding different processed contents. Processing is usually understood to be decrypting. In another variant of this embodiment, the conditional access module comprises a plurality of processing modules, one for each content. In all variants of this embodiment, the first transport stream comprises the first transport stream tracks as discussed previously but further comprises, as well as the first transport stream file, a further one or more first transport stream files. This plurality of files is processed to give a plurality of processed contents. It is then possible to either store or display at least one of the files and store the others for example. As many file tracks as necessary can then be inserted, by the CAM, into the second transport stream to be received by the host and treated accordingly. In other words, according to these embodiments, the conditional access module is configured to process a plurality of first transport stream files to give a plurality of second transport stream files representative of a plurality of media contents and to insert the plurality of second transport stream files into the second transport stream and further configured to provide information relative to the plurality of second transport stream files to the host device.

In another embodiment of the present invention, the file track is structured as a carousel of files, typically a DVB DSMCC carousel. Using a carousel means that a file is always available in the "file track" in a loop until the complete file (or all of the chunks) has been successfully extracted by the CICAM (conditional access module). Hence, the real-time constraints are somewhat eased. An example of such real-time constraints is that the CICAM may miss the first appearance of the file or chunk in the carousel and would then be able to get it when it next appears. The file exchange resource is used by the CICAM to inform the host device that a given file or chunk has been successfully extracted from the file track and can therefore be removed from the file track.

The file inserter (FINSC) (e.g. a multiplexer), which allows the muxing of the individual tracks (audio, video, sub-titles, ...), makes sure that tracks are inserted progressively so as to respect the original timing information as expressed in the original container format (MPEG2 or ISOBMFF for example).

## Claims

1. A system for receiving and presenting media content (CT), the system comprising a host device (H) and a conditional access module (CAM) configured to be connected to the host device (H), the connection comprising a transport stream interface (TSIF) and a command interface (CDIF);
the host device (H) being configured to send a first transport stream (TS1) comprising at least one first transport stream track (TS1T0, TS1T1) via the transport stream interface (TSIF) and to receive, via the transport stream interface (TSIF), a second transport stream (TS2) comprising at least one second transport stream track (TS2T0. TS2T1);
the host device (H) comprising:
a broadcast receiver (RXB) to receive a broadcast signal (B) from a broadcast network (NWB) and to decode the broadcast signal (B) to give the first transport stream track (TS1 T0, TS1 T1); and
a media player (MP) to present the media content (CT);
the system **characterised in that**:
the host device (H) further comprises:
a streaming client (HAS) to retrieve at least one chunk of an unprocessed version (CTE) of the media content (CT) via a second receiver (RXIP) from at least a first file (F1) comprising a plurality of chunks of the unprocessed version (CTE) of the media content (CT);
means to insert the retrieved chunk into a file track (TS1FT) in the first transport stream (TS1), thereby building a first transport stream file (TF1);
means to provide information relative to the first transport stream file (TF1) to the conditional access module (CAM) via the command interface (CDIF); and
means to extract a second transport stream file (TF2) representative of the content (CT) from a file track (TS2FT) in the second transport stream (TS2),
the extraction using information relative to the second transport stream file (TF2), the host device (H) being configured to receive said information via the command interface (CDIF);
and the conditional access module (CAM) comprises:
means to extract the first transport stream file (TF1) from the first transport stream (TS1), using information relative to the first transport stream file (TF1), the conditional access module (CAM) being configured to receive said information via the command interface (CDIF);
at least one processing module (DECR) to process at least the first transport stream file (TF1) to give at least the second transport stream file (TF2) representative of the media content (CT);
means to insert the second transport stream file (TF2) into the file track (TS2FT) in the second transport stream (TS2); and
means to provide information relative to the second transport stream file (TF2)
to the host device (H) via the command interface (CDIF);
the media player (MP) being configured to play the second transport stream file (TF2), thereby presenting the media content (CT).

2. The system according to claim 1, wherein the media content in the first file (F1) is encrypted, the processing module (DECR) in the conditional access module (CAM) is a decryption module to decrypt the first transport stream file (TF1) to give the second transport stream file (TF2) representative of the media content (CT).

3. The system according to any of the preceding claims, wherein the streaming client (HAS) is an adaptive streaming client configured to retrieve the chunks of content from a plurality of files (F1, F2) each comprising a different version of the content, each version representing the content at a different encoding quality.

4. The system according to any of the preceding claims, wherein the conditional access module is further configured to encrypt at least part of the second transport stream and the host device is further configured to decrypt the second transport stream.

5. The system according to any of the preceding claims, wherein the streaming client (HAS) is configured to operate according to an MPEG DASH protocol.

6. The system according to any of the preceding claims, wherein the first file (F1) conforms to an ISOBMFF Standard or an MP4 Standard.

7. A host device (H) for receiving and presenting media content (CT), the host device (H) being configured to build a first transport stream (TS1) comprising at least one first transport stream track (TS1T0, TS1T1) and to receive a second transport stream (TS2) comprising at least one second transport stream track (TS2T0, TS2T1); the host device (H) comprising:
a transport stream interface (TSIF);
a command interface (CDIF);
a broadcast receiver (RXB) to receive a broadcast signal (B) from a broadcast network (NWB) and to decode the broadcast signal (B) to give the first transport stream track (TS1T0, TS1T1); and
a media player (MP) to present the media content (CT);
the host device (H) **characterised in that** it further comprises:
a streaming client (HAS) to retrieve at least one chunk of an unprocessed version (CTE) of the media content (CT) via a second receiver (RXIP) from at least a first file (F1) comprising a plurality of chunks of the unprocessed version (CTE) of the media content (CT);
means to insert the retrieved chunk into a file track (TS1 FT) in the first transport stream (TS1), thereby building a first transport stream file (TF1);
means to send information relative to the first transport stream file (TF1) via the command interface (CDIF); and
means to extract a second transport stream file (TF2) comprising the content (CT) from a file track (TS2FT) in the second transport stream (TS2), the extraction using information relative to the second transport stream file (TF2),
the host device (H) being configured to receive said information via the command interface (CDIF);
the media player (MP) being configured to play the second transport stream file (TF2), thereby presenting the media content (CT).

8. The host device according to claim 7, wherein the first file (F1) conforms to an ISOBMFF Standard or an MP4 Standard.

9. A conditional access module (CAM) to process at least part of a first transport stream (TS1), the conditional access module comprising:
a transport stream interface (TSIF) to receive the first transport stream (TS1);
a command interface (CDIF);
means to extract a first transport stream file (TF1) from the first transport stream (TS1), using information relative to the first transport stream file (TF1), the conditional access module (CAM) being configured to receive said information via the command interface (CDIF);
a processing module (DECR) to process the first transport stream file (TF1) to give a second transport stream file (TF2);
means to insert the second transport stream file (TF2) into a file track (TS2FT) in the second transport stream (TS2); and
means to send information relative to the second transport stream file (TF2) via the command interface (CDIF).

10. A method for receiving and presenting media content (CT) using a system comprising a host device (H) and a conditional access module (CAM) configured to be connected to the host device (H), the connection comprising a transport stream interface (TSIF) and a command interface (CDIF), the method comprising:
receiving in the host device (H), via file streaming means, at least one chunk of an unprocessed version (CTE) of the media content (CT);
preparing a first transport stream file (TF1) comprising the chunk of the unprocessed version (CTE) of the media content (CT);
inserting the first transport stream into a file track (TS1 FT) of a first transport stream (TS1);
sending, via the transport stream interface (TSIF), the first transport stream (TS1);
sending, via the command interface, information relative to the first transport stream file (TF1);
extracting, in the conditional access module (CAM), the first transport stream file (TF1) from the first transport stream (TS1) using the information relative to the first transport stream file (TF1);
processing the first transport stream file (TF1) in the conditional access module to give a second transport stream file (TS2) representative of the media content (CT);
inserting the second transport stream file (TF2) into a second transport stream (TS2);
sending, via the transport stream interface (TSIF), the second transport stream (TS2);
sending, via the command interface (CDIF) information relative to the second transport stream file (TF2);
extracting, in the host device (H), the second transport stream file (TF2) from the second transport stream (TS2) using the information relative to the second transport stream file (TF2);
presenting, the second transport stream file (TF2) using a media player (MP).

11. The method according to claim 10, wherein the processing in the conditional access module (CAM) is a decryption process.

12. The method according to either of claims 10 or 11, wherein the at least part of the second transport stream (TS2) is encrypted in the conditional access module (CAM) before sending to the host device (H) and is decrypted in the host device (H).
